(19) Europäisches Patentamt
European Patent Office
Office européen des brevets

(11) **EP 2 775 473 A2**

(12) **EUROPEAN PATENT APPLICATION**

(43) Date of publication:
**10.09.2014 Bulletin 2014/37**

(51) Int Cl.:
**G09G 3/20** *(2006.01)*

(21) Application number: **14156874.1**

(22) Date of filing: **26.02.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **08.03.2013 KR 20130025020**<br>**23.07.2013 KR 20130086667**<br><br>(71) Applicant: **Samsung Electronics Co., Ltd.**<br>**Suwon-si Gyeonggi-do 443-742 (KR)**<br><br>(72) Inventors:<br>• **Yun, Sang-Un**<br>**Gyeonggi-do (KR)** | • **Lee, Sang-hoon**<br>**Seoul (KR)**<br>• **Kim, Jong-woo**<br>**Seoul (KR)**<br>• **Kim, Gae-youn**<br>**Gyeonggi-do (KR)**<br>• **Huh, Tae-young**<br>**Gyeonggi-do (KR)**<br>• **Lee, Min**<br>**Seoul (KR)**<br><br>(74) Representative: **Bray, Richard Anthony**<br>**Appleyard Lees**<br>**15 Clare Road**<br>**Halifax HX1 2HY (GB)** |

(54) **Display apparatus and control method thereof**

(57)     Disclosed are a display apparatus and a control method thereof, there is provided a display apparatus is provided including: an image processor configured to process a video signal into an image; a display unit comprising a reproducing area where the processed image is displayed and a non-reproducing area where no image is displayed; and an optical sheet provided on the non-reproducing area of the display unit, wherein the optical sheet is configured to diffuse light passed therethrough and configured to visually hide the non-reproducing area.

FIG. 2

**Description**

BACKGROUND

Field

Apparatuses and methods consistent with exemplary embodiments relate to a display apparatus and a control method thereof, and more particularly to a display apparatus provided with a display panel for displaying an image, and a control method thereof.

Description of the Related Art

A television (TV) or the like display apparatus processes a video signal/video data transmitted from various external video sources or a video signal/video data stored in the display apparatus itself, and displays the processed video signal/video data as an image on a display panel. As examples of the display apparatus provided to the general public, there are the TV, a monitor, etc. For example, the TV provides an image of the user's desired broadcasting channel through various imaging processes such as decoding, scaling, etc. applied to a broadcasting signal received from the various external video sources.

The display apparatus needs an internal space to be occupied with a circuit for driving the display panel, a device for fastening, etc., and such internal space may also include a black matrix (BM) area provided outside of a reproducing area where the image is displayed, and a mechanical bezel area. With a recent trend of thin and aesthetic design, the display apparatus includes the black matrix area and the bezel area at an outermost edge of the display screen thereof.

However, the black matrix area or the bezel area may disturb a user's engagement to an image being displayed, and restrict the product design of the display apparatus. In a particular case of a digital signage using a plurality of display apparatuses or a large format display (LFD), it is ineffective since one image is disconnectedly displayed using the plurality of display apparatuses. Recently, the bezel area has been designed to be narrow or to be as invisible from the front as much as possible, but there is a physical limit to fully resolving visual imperfection due to the presence of the black matrix area.

SUMMARY

It is an example aim of example embodiments to obviate or mitigate one or more problems of the prior art, whether identified herein or elsewhere, and/or to provide to the prior art.

According to the present invention there is provided an apparatus and method as set forth in the appended claims. Other features of the invention will be apparent from the dependent claims, and the description which follows.

According to an aspect of an exemplary embodiment, there is provided a display apparatus including: an image processor configured to process a video signal into an image; a display unit comprising a reproducing area where the processed image is displayed and a non-reproducing area where no image is displayed (or at least a different image to that of the main/central image reproducing area); and an optical sheet provided (at least partially) on the non-reproducing area of the display unit, wherein the optical sheet is configured to diffuse light passed therethrough and thus configured to visually hide the non-reproducing area.

The non-reproducing area may include a black matrix area surrounding the reproducing area.

The non-reproducing area may further include a bezel area surrounding at least one of the reproducing area and the black matrix area.

The optical sheet may be configured to output the light passed through the optical sheet from the non-reproducing area.

The optical sheet may be configured to output the light passed therethrough from the black matrix area toward the non-reproducing area.

The image processor may include an image compensator configured to compensate for image distortion due to the optical sheet.

The display apparatus may further include a controller configured to control the image compensator to analyze a characteristic of the optical sheet and compensate for the image distortion based on the compensator analysis.

The controller may include an optical analyzer configured to analyze at least one of image expansion, low brightness, and low image quality due to the optical sheet.

The display apparatus may further include a storage configured to store an information table generated by measuring the characteristic of the optical sheet, wherein the optical analyzer is configured to control the image compensator to compensate for the image distortion through inverse transformation of the information table.

The optical analyzer may be configured to control the image compensator to compensate for the image distortion through at least one of a brightness compensating coefficient and an image quality compensating coefficient.

The image compensator may be configured to perform at least one of definition improvement, brightness adjustment and contrast adjustment definition.

The optical sheet may include a pattern configured to guide the light passed through the optical sheet.

The pattern may include: a low density area in a light incident area; and a high density area in an edge area of the display unit.

The pattern may include a pattern of diffusing particles configured to diffuse the light passed through the optical sheet.

The optical sheet may be attached to at least a part of the display unit on a surface extending perpendicular from a display apparatus thickness direction.

The optical sheet may include a prism sheet having a triangular cross-section.

A width of the optical sheet in a direction perpendicular from a display apparatus thickness direction may be larger than a width of the non-reproducing area.

According to an aspect of another exemplary embodiment, a method of controlling a display apparatus which includes a display unit including a reproducing area where an image is displayed and a non-reproducing area where no image is displayed (or at least a different image to that of the main/central image reproducing area) is provided including: providing an optical sheet at least partially on the non-producing area of the display unit; processing a video signal; and displaying an image based on the processed video signal, wherein the displaying comprises: diffusing light of the image through the optical sheet; and visually hiding the non-reproducing area via the diffused light.

The non-reproducing area may include a black matrix area surrounding the reproducing area.

The non-reproducing area may further include a bezel area surrounding at least one of the reproducing area and the black matrix area.

The method may further include outputting the light passed through the optical sheet from the non-reproducing area.

The method may further include outputting the light from the black matrix area and passed through the optical sheet from the non-reproducing area.

The processing may include compensating for image distortion due to the optical sheet.

The compensating may include: analyzing characteristic of the optical sheet; and compensating for the image distortion based on the analysis.

The analyzing the characteristic may include analyzing at least one of image expansion, low brightness, and low image quality of the optical sheet.

The method may further include: measuring the image distortion due to the optical sheet; generating an information table based on the measured distortion; and storing the information table, wherein the compensating comprises compensating for the image distortion through inverse transformation of the information table.

The compensating may include compensating for the image distortion through at least one of a brightness compensating coefficient and an image quality compensating coefficient.

The compensating may include performing at least one of definition improvement, brightness adjustment and contrast adjustment definition.

The optical sheet may comprise a pattern configured to guide the light passed through the optical sheet.

The pattern may comprise: a low density area in a light incident area; and a high density area in an edge area of the display unit.

The optical sheet may be attached to at least a part of the display unit on a surface extending perpendicular from the display apparatus thickness direction.

The optical sheet may comprise a prism sheet having a triangular cross-section.

According to an aspect of another exemplary embodiment, there is provided a display panel is including: a reproducing area configured to display an image; a non-reproducing area configured to display no image and surrounding the reproducing area; and an optical sheet provided on the non-reproducing area configured to diffuse light from the image of the reproducing area and configured to visually hide the non-reproducing area, wherein a width of the optical sheet in a direction perpendicular from a display apparatus thickness direction is larger than a width of the non-reproducing area.

The non-reproducing area may include at least one of a black matrix area and a bezel area.

The optical sheet may be configured to output the light passed through the optical sheet from the non-reproducing area.

The optical sheet may include a pattern configured to guide the light passed through the optical sheet.

The pattern may include: a low density area in a light incident area; and a high density area in an edge area of the display unit.

The pattern may include a pattern of diffusing particles configured to diffuse the light passed through the optical sheet.

According to an aspect of yet another exemplary embodiment, there is provided a display panel is including: a display unit configured to display an image; and an optical sheet disposed on a display side of the display unit, the optical sheet configured to diffuse light emitted from an edge area of the display unit in which the image is displayed towards an outermost edge of the display panel.

The optical sheet may extend at least partially across and/or over one or more, or a combination of, the reprocuding area, the non-reproducing area, the bezel area, and/or a boundary, join or interface between such areas, or between adjacent panels/displays.

It will be appreciated that one or more features of one or more aspects of the invention may be used in combination with and/or in place of one or more features of one or more other aspects of the invention, unless clearly understood by the skilled person to be mutually exclusive from a reading of this disclosure. For instance, any apparatus feature may be used in a method aspect, and any method feature may be used in any apparatus aspect.

BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is a block diagram of a display apparatus according to an exemplary embodiment;
FIG. 2 is a block diagram of a display unit of FIG. 1 according to the exemplary embodiment;
FIGs. 3 and 4 are views illustrating a structure of a non-reproducing area in a display apparatus of the related art;
FIGs. 5 and 6 are views illustrating the display apparatus including an optical sheet according to an exemplary embodiment;
FIG. 7 is a view illustrating a principle that light is diffused by the optical sheet;
FIG. 8 is a view illustrating an example that a prism sheet is employed as the optical sheet of the exemplary embodiment;
FIG. 9 is a block diagram of the display unit according to another exemplary embodiment;
FIG. 10 is a view illustrating an example where a pattern is formed on the optical sheet according to an exemplary embodiment;
FIGs. 11 to 15 are views illustrating an image compensating process according to an exemplary embodiment;
FIG. 16 is a view illustrating images before and after compensating the image displayed on the display unit according to an exemplary embodiment; and
FIG. 17 is a flowchart illustrating a control method of the display apparatus according to an exemplary embodiment.

DETAILED DESCRIPTION

Below, exemplary embodiments will be described in detail with reference to accompanying drawings.

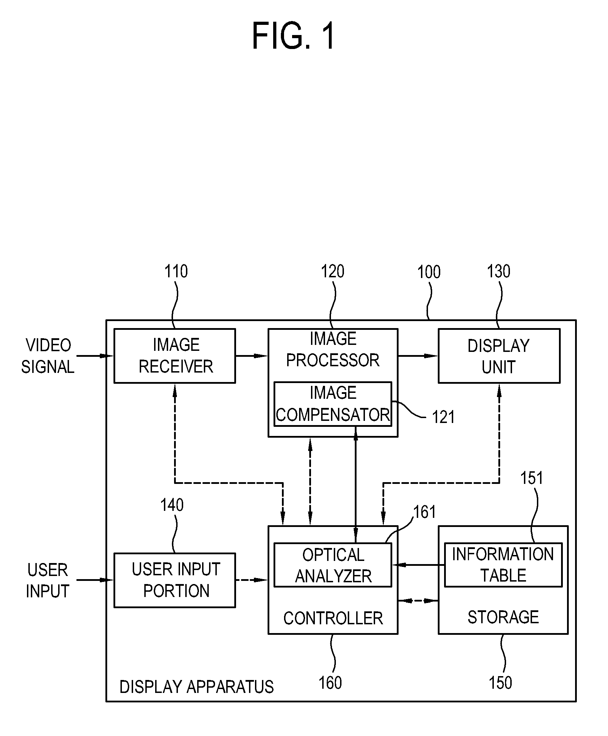

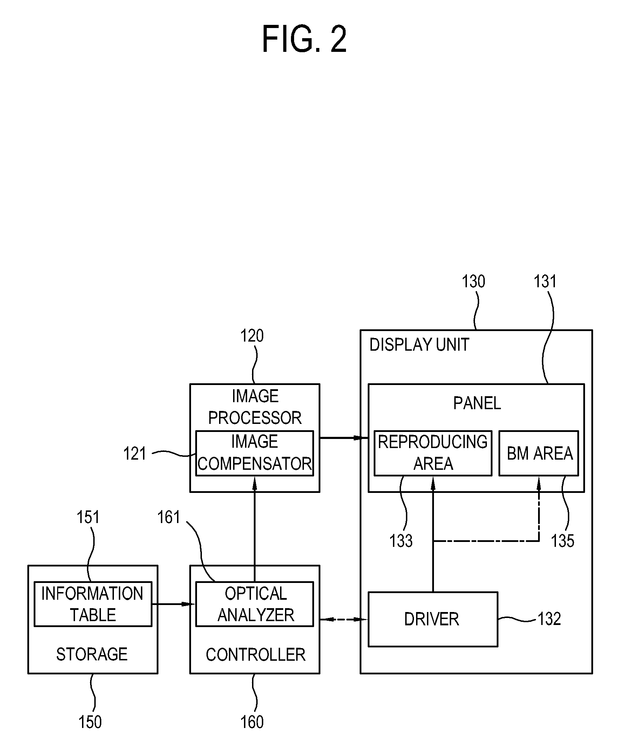

FIG. 1 is a block diagram of a display apparatus 100 according to an exemplary embodiment, and FIG. 2 is a block diagram of a display unit 130 of FIG. 1 according to the exemplary embodiment.

As shown in FIG. 1, the display apparatus 100 processes a video signal from an external video source (not shown) through a preset imaging process and displays an image according to the processed video signal.

In the exemplary embodiment, the display apparatus 100 will be described as a television (TV) that displays a broadcasting image based on a broadcasting signal/broadcasting information/broadcasting data received from a transmitter of a broadcasting station. However, the inventive concept is not limited to the display apparatus 100 being the TV according to the exemplary embodiment. The display apparatus 100 may include various exemplary embodiments such as a monitor or the like, which can display an image, in addition to the TV.

Also, the type of images displayable in the display apparatus 100 are not limited to the broadcasting image. For example, the display apparatus 100 may display a moving image, a still image, an application, an on-screen display (OSD), a graphic user interface (GUI, hereinafter, referred to as a UI) for controlling various operations, or the like image based on a signal/data received from various internal / external video sources (not shown).

As shown in FIG. 1, the display apparatus 100 includes an image receiver 110 which receives a video signal, an image processor 120 which processes the video signal received in the image receiver 110, a display unit 130 which displays the video signal processed by the image processor 120 as an image, a user input portion 140 which receives a user's input, a storage 150 which stores various data, and a controller 160 which controls the display apparatus 100.

The image receiver 110 receives the video signal and transmits the received video signal to the image processor 120. The image receiver 110 may be achieved in various methods in accordance with formats of the video signal and types of the display apparatus 100. For example, the image receiver 110 may wirelessly receive a radio frequency (RF) signal from a broadcasting station (not shown), or wiredly receive a video signal in accordance with one or more standards such as composite video, component video, super video, Syndicat des Constructeurs d'Appareils Radiorécepteurs et Téléviseurs (SCART), high definition multimedia interface (HDMI). The image receiver 110 may include a tuner to be tuned to a channel for a broadcasting signal if the video signal is the broadcasting signal.

Also, the video signal may be input from an external device. For example, the video signal may be input from the external device such as a personal computer, an audio/video device, a Smart phone, a Smart pad, etc. Also, the video signal may be based from data received from a network such as Internet or the like. In this case, the display apparatus 100 may further include a network communicator (not shown) which performs communication through a network. Also, the video signal may be based from data stored in a non-volatile storage 150 such as a flash memory, a hard disk drive, etc. The storage 150 may be provided inside or outside the display apparatus 100. In the case where the storage 150 is provided outside the display apparatus 100, the display apparatus 100 may further include a connector (not shown) to which the storage 150 is connected.

The image processor 120 performs various preset imaging processes on the video signal. The image processor 120 outputs such a processed video signal to the display unit 130, thereby displaying the processed image on the display unit 130.

There is no limit to the type of imaging processes performed in the image processor 120. For example, the imaging processes may include decoding corresponding to various video formats, de-interlacing, frame refresh rate conversion, scaling, noise reduction for improving image quality, detail enhancement, line scanning, etc. In the exemplary embodiment, the image processor 120 may further perform an imaging process to compensate image distortion due to the presence of an optical sheet 138, e.g. having a width (s), to be described later. Such compensation imaging process may include at least one of definition improvement, brightness adjustment and contrast adjustment of the video signal passing through the optical sheet 138.

The image processor 120 may be a group of individual elements which independently perform each process, or may be a system on a chip where many functions are integrated.

As shown in FIG. 1, the image processor 120 in the exemplary embodiment may include an image compensator 121 which compensates for the image distortion due to the optical sheet 138 attached to or forming part of the display unit 130. The image compensator 121 may compensate for image expansion, low brightness, low image quality, etc. due to the optical sheet 138 having the width (s), as analyzed by the optical analyzer 161, which will also be described later. In the exemplary embodiment, the image processor 120 can perform up or down scaling with regard to the video signal so that the image compensator 121 can compensate for the image expansion.

The display unit 130 displays an image based on a video signal processed by the image processor 120. The display unit 130 may include various types such as liquid crystal, plasma, a light emitting diode (LED), an organic light emitting diode, a surface-conduction electron emitter, a carbon nano tube, nano crystal as an example of a flat panel display (FPD), but the exemplary embodiment is not limited thereto.

The display unit 130 may include additional elements in accordance with the type of the display unit 130. Specifically, as shown in FIG. 2, the display unit 130 includes a display panel 131, a driver 132 for driving the display panel 131, and a timing controller (hereinafter, referred to as a T-con) (not shown) coupled to a front end of the display panel 131, controlling the driver 132, and improving image quality. Here, if the display unit 130 is a type of liquid crystal or a light emitting diode by way of an example, the display unit 130 may further include a backlight unit (not shown) for emitting light to the display panel 131.

The display panel 131 includes a screen/image reproducing area 133 (hereinafter, referred to as a "reproducing area") where a video signal processed by the image processor 120 is displayed as an image, and a screen/image non-reproducing area 135 (hereinafter, referred to as a "non-reproducing area") where any image cannot be displayed. The non-reproducing area 135 includes or is a black matrix area 135 (hereinafter, referred to as a "BM area") provided outside of the reproducing area 133, and a bezel area 137 provided at an outermost edge or rim of the display unit 130.

The bezel 137 might alternatively and/or additionally be defined as an element providing a relatively raised surface, e.g. in comparison with a level or elevation or height of one or more of the reproducing area 133, the non-reproducing area 135 and/or the black matrix area 135. The bezel 137 might alternatively and/or additionally be defined as a spatially peripheral structure used in the manufacture of the apparatus as a whole, e.g. a clamping, fixing, mounting or bordering region.

The black matrix 135 might alternatively and/or additionally be defined as a light shielding or light blocking area. The matrix may be a film or other layer, or may be built into a sheet or the like that also, at other areas, allows light to be transmitted. In another example, the black matrix 135 might be a region of pixels that do not emit or transmit light, at least in use.

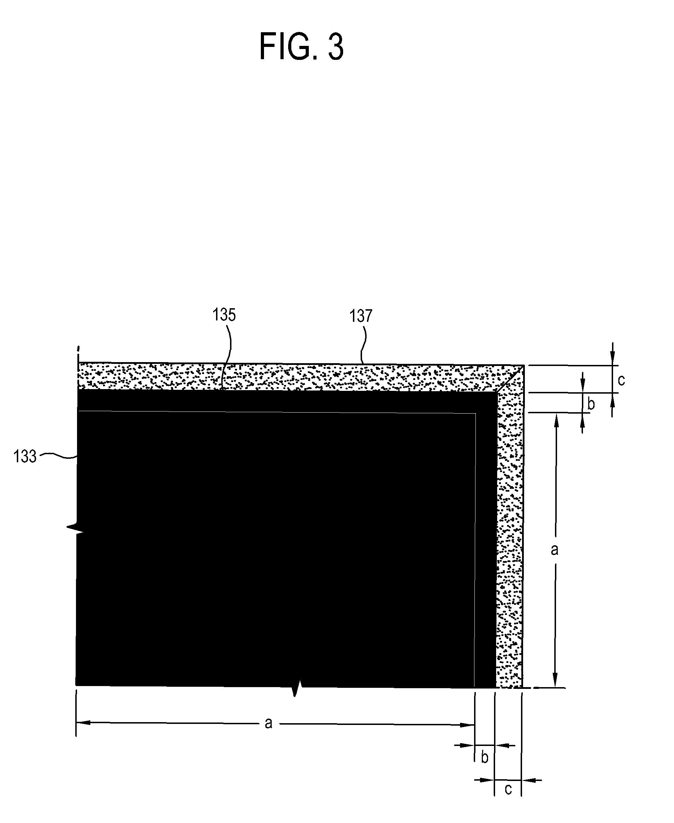

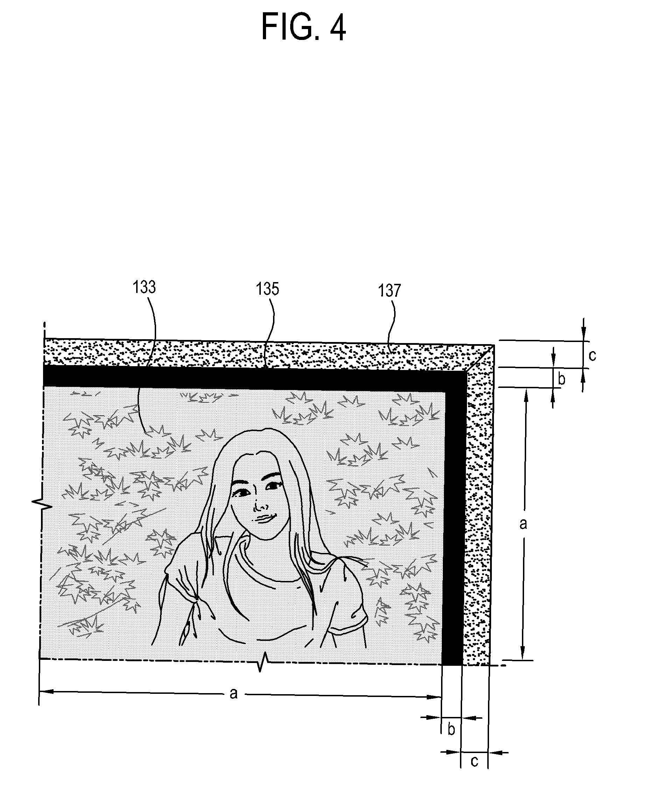

FIGs. 3 and 4 are views for explaining a structure of a non-reproducing area in a display apparatus of the related art;

As shown in FIGs. 3 and 4, the display panel 131 of the display unit 130 includes the reproducing area 133 having a width (a) as a pixel area where an image is displayed using those pixels, and the BM area 135 having a width (b) as a pixel area placed along an outer edge of the reproducing area 133. The BM area 135 may have the width (b) corresponding to a predetermined number of pixels (e.g., 3 pixels), and the pixels (or an equivalent area if no pixels are present) of the BM area 135 (is) are represented as black. In the BM area 135, a circuit board including the driver 132 may be placed, for example behind, in front of, amongst, or instead of image producing pixels.. Therefore, while an image is displayed as shown in FIG. 4, a border is clearly sectioned and visible between the reproducing area 133 having the width (a) and the BM area 135 having the width (b).

Just to be clear, the BM area 135 may comprise pixels in one embodiment, for example pixels that are used in an active or passive manner to provide a non-reproducing area. In another example, no pixels may be used, and the BM area 135 may simply have an area or width that is in some way equivalent to, or described in relation to, a typical pixel (e.g. of a reproducing area) dimension.

In a related example, the or a non-reproducing area might be an area or join between adjacent panels, for example in a multi-panel display.

Also, the bezel area 137 having a width (c) is positioned at the outer edge of the BM area 135, that is, at the outermost edge of the display unit 130. The bezel area 137 is configured to fasten the display panel 131, a backlight unit (BLU), etc., and is an area where the bezel is positioned. The bezel area 137 and a part of the BM area 135 may be recognized as a bezel by a general public, and the non-reproducing area 135 may be recognized as a border of separating a display screen and the bezel as shown in FIG. 4 when an image is reproduced.

In the exemplary embodiment, the display apparatus 100 further includes an optical sheet 138 having a width (s) provided corresponding to the non-reproducing area 135 of the display unit 130.

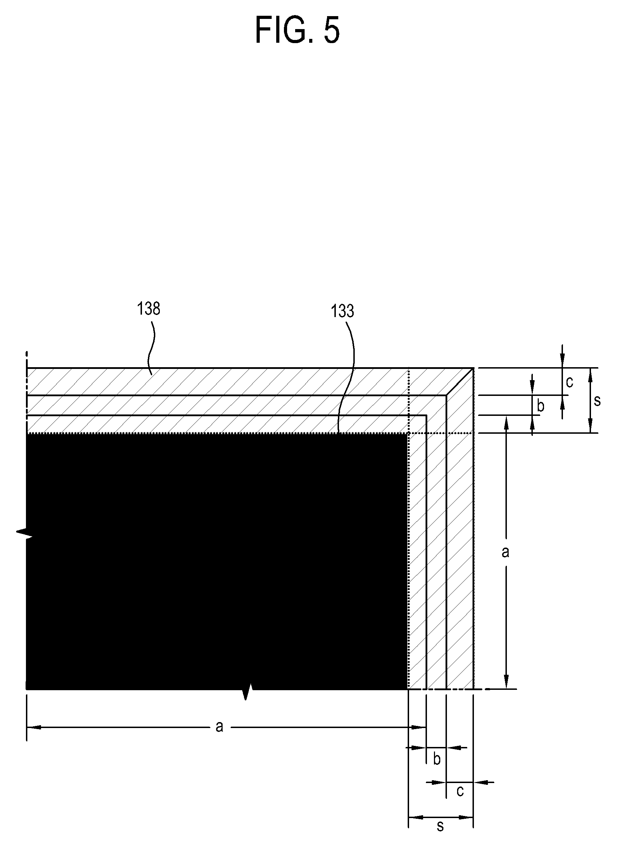

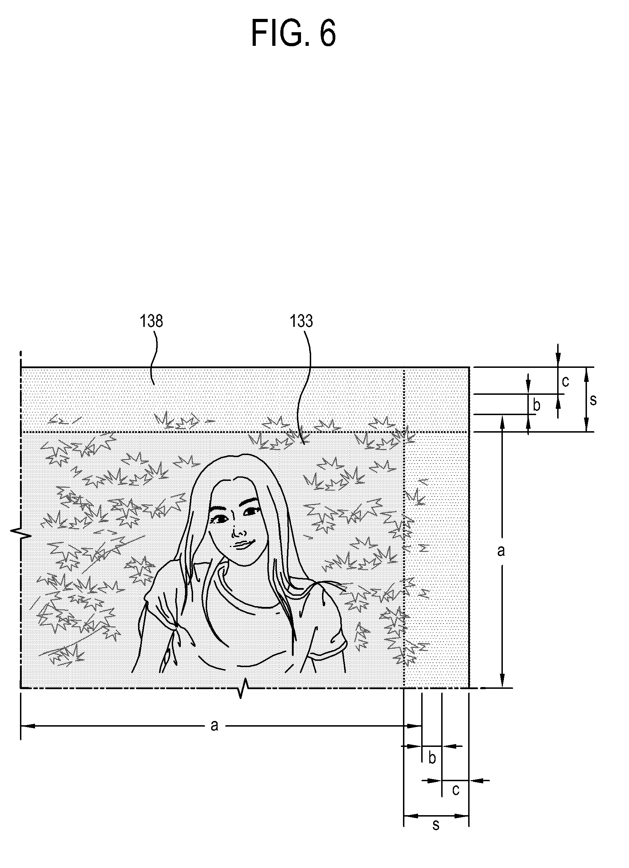

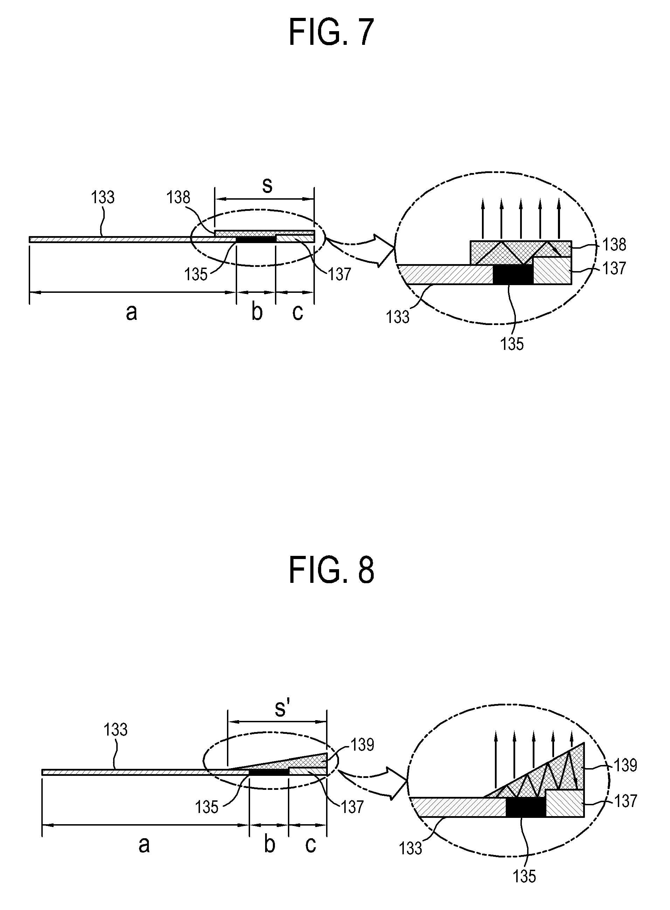

FIGs. 5 and 6 are views illustrating the display apparatus including an optical sheet 138 having a width (s) according to an exemplary embodiment, and FIG. 7 illustrates a view for explaining a principle where light of a visual signal is diffused by the optical sheet 138.

In the display apparatus 100 according to the exemplary embodiment, the optical sheet 138 (which may be an optical film) may be attached to a part of a front (i.e. a display side) of the display unit 130. Here, as shown in FIGs. 5 to 7, the optical sheet 138 may be attached along an outer-side/edge/periphery of the front of the display unit 130, and have the width (s) larger than the width of the non-reproducing area 135, i.e., the sum (b+c) of the BM area 135 having the width (b) and the bezel area 137 having the width (c), so that light (or a part or portion thereof, such as a beam) of or emitted from the reproducing area 133 can enter the optical sheet 138. Here, the width (s - (b+c)) where the optical sheet 138 overlaps with the reproducing area 133 may be designed so that enough light from the reproducing area 133 can enter and penetrate the optical sheet 138. 'Enough' light may be an amount sufficient to visually hide one or both of the non-reproducing area 135, the BM area 135 and/or the bezel area 137, and/or a join between adjacent panels.

FIGs. 5 through 7 illustrate an example where the optical sheet 138 is attached to only a part of the front of the display unit 130, but the exemplary embodiment is not limited thereto. Alternatively, the optical sheet 138 may be attached to the entire front of the display unit 130. If the optical sheet 138 is attached to the entire front of the display unit 130, a pattern or the like may be used to minimize diffusion of light passed through the optical sheet 138 toward and/or from the reproducing area 133 and fully diffuse the light toward and/or from the non-reproducing area. So, the image reproducing area 133 is largely unaffected by the sheet 138, whereas the non-reproducing area is affected, for example to visually hide the non-reproducing area.

The optical sheet 138 diffuses the light moving from the reproducing area 133, and at least partially visually hides (which includes disguising or obscuring) the non-reproducing area 135. That is, if the optical sheet 138 is attached to the part of the front of the display unit 130 as shown in FIG. 5 and an image is displayed as shown in FIGs. 6 and 7, the light from the reproducing area 133 (for example, light around the border between the reproducing area 133 and the BM area 135) enters and penetrates the optical sheet 138. The penetrated light is diffused into/toward the bezel area 137 of the front of the display unit 130 and emitted out of the display unit 130. To this end, the optical sheet 138 may have a predetermined transmittance (e.g., 30%) at which light can be sufficiently emitted even to an outermost edge part of the display unit 130 distant from an incident/emitting part (i.e. the reproducing area 133).

Thus, as shown in FIG. 6, there is an effect on visually hiding the BM area 135 having the width (b) and the bezel area 137 having the width (c), so that a user can enjoy watching an image without any disconnection of the image due to the non-reproducing area including the BM area 135 and the bezel area 137. In other words, the image/light provided by the reproducing area does not end abruptly at the BM area and/or or bezel area 137.

Meanwhile, an exemplary embodiment may be applied when the width (c) of the bezel, that is, the bezel area 137 is designed to be narrow, or the bezel area 137 is designed not to be seen in front of the display apparatus 100.

In the exemplary embodiment, the optical sheet s may be a prism sheet 139 having a width (s'). FIG. 8 is a view illustrating an example that the prism sheet 139 having a width (s') is employed as the optical sheet 138 of the exemplary embodiment.

As shown in FIG. 8, if the prism sheet 139 is used as the optical sheet 138, the cross section of the prism sheet 139 may be a triangle. The prism sheet 139 having the width (s') transmits and diffuses the incident/emitted light from the reproducing area 133 so that the light can be emitted in front of the display unit 130 through or in front of the BM area 135 having the width (b) and the bezel area 137 having the width (c). Further, the incident light is condensed or otherwise directed toward the outermost edge distant from the reproducing area 133, that is, from the incident part, so that light can be uniformly emitted from the entire area of the display device 130 to which the prism sheet 139 is attached.

FIGs. 7 and 8 illustrate the optical sheet 138 and the prism sheet 139 transmitting and diffusing the incident light from the reproducing area 133, but the exemplary embodiments are not limited thereto. Alternatively, the optical sheets 138 or the prism sheet 139 may transmit and diffuse the light emitted from the black matrix area 135, if applicable. When the light of the BM area 135 enters the optical sheets 138 and the prism sheet 139, the driver 132 of FIG. 2 may drive not only the reproducing area 133 but also the BM area 135. For example, the BM area might only be a temporary BM area. Alternatively and/or additionally, the non-reproducing area may no longer be, or be described as, a BM area. Instead, the area might now simply be an area that does not produce an image, or the same image as the in the reproducing area. However, the area might still emit/transmit light, for example via pixels in that area.

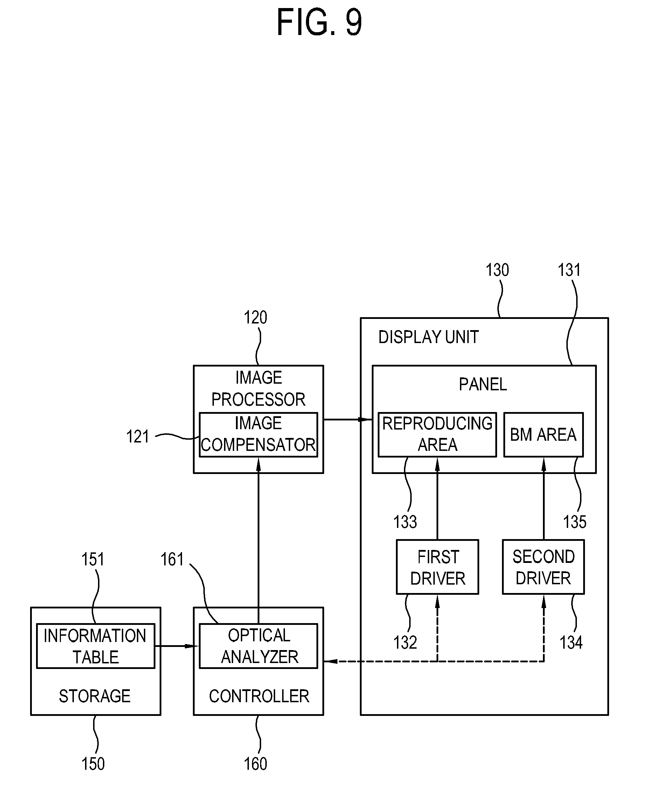

FIG. 9 is a block diagram of the display unit according to another exemplary embodiment.

As shown in FIG. 9, when the light of the BM/non-reproducing area 135 having a width (b) enters the optical sheets 138 or the prism sheet 139, the display unit 130 may further include a separate driver 134 for driving the BM/non-reproducing area 135. In FIG. 9, a driver for driving the BM/non-reproducing area 135 is illustrated as a second driver 134 discrete from a first driver 132 which drives the reproducing area 133 as shown in FIG. 2.

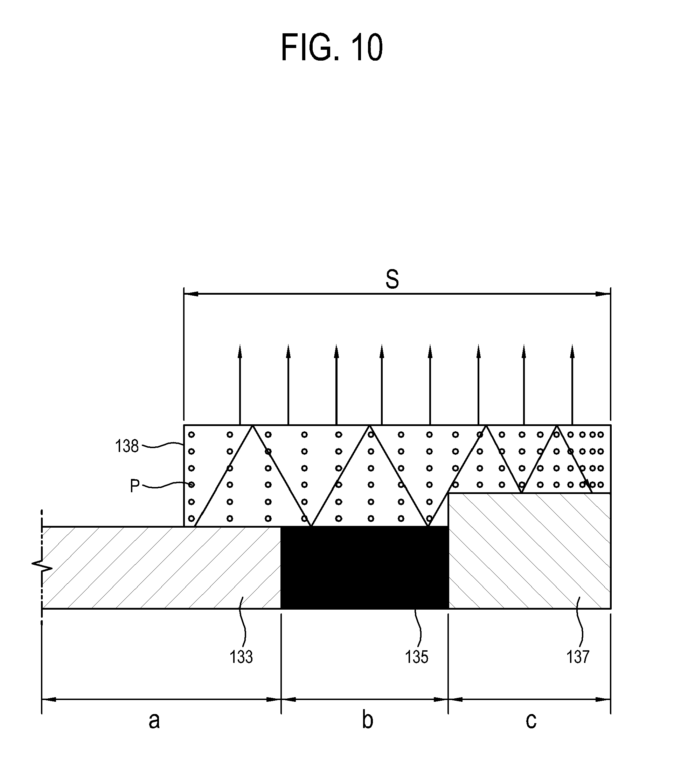

The exemplary embodiment shown in FIG. 9 is characterized in further including the second driver 134 for driving the BM/non-reproducing area 135 of the display unit 130 as compared with the exemplary embodiment of FIG. 2. Therefore, elements except the second driver 134 will be referred to by like numerals and terms as those of FIG. 2, and detailed descriptions about these elements will be omitted to avoid repetitive descriptions. Also, the foregoing FIGs. 3 to 8 and the following FIGs. 10 to 16 are applied in common to both the display apparatus 100 of FIG. 2 and the display apparatus 100 of FIG. 9.

Meanwhile, the optical sheet 138 having a width (s) may be internally formed with a plurality (e.g. a pattern p) of diffusing (which includes scattering) particles for guiding the penetrated light.

FIG. 10 is a view showing an example where the pattern p of diffusing particles is formed on the optical sheet 138 according to an exemplary embodiment.

As shown in FIG. 10, the pattern p of diffusion particles formed inside the optical sheet 138 may have a low density pattern/distribution in a light incident area and have a high density pattern/distribution toward an outer-most edge of the display unit 130. Therefore, the light of the reproducing area 133 or the BM/non-reproducing area 135 is sufficiently diffused towards the outer-most edge of the optical sheet 138 distant from an incident/emitting part (i.e. the reproducing area 133), and thus the incident light is uniformly emitted in front of the display unit 130 throughout the optical sheet 138.

In FIG. 10, the pattern p of diffusing particles formed inside the optical sheet 138 to diffuse the incident light. However, the exemplary embodiment is not limited thereto. For example, any pattern p capable of diffusing or otherwise scattering the incident light from the reproducing area 133 may be used in or on the optical sheet 138.

The user input portion 140 of FIG. 1 transmits various preset control commands or non-restrictive information to the controller 160 in response to a user's control and input. The user input portion 140 may be a control panel (not shown) including buttons such as a menu key installed outside the display apparatus 100, a remote controller (not shown) separated from the display apparatus 100, etc. If the user input portion 140 is the remote controller, there is no limit to a method of transmitting a user's input from the user input portion 140 to the controller 160, and for example, wireless communication may be used. The wireless communication includes infrared communication, radio frequency (RF) communication, etc. In this case, the display apparatus 100 may further include a communication module (not shown) that receives a signal corresponding to a user's input from the user input portion 140 and transmits the received signal to the controller 160.

The storage 150 stores data without any limit under control of the controller 160. The storage 150 may include a nonvolatile storage medium such as a flash-memory, a hard-disc drive, etc. The storage 150 is accessed by the controller 160 so that the data can be read/recorded/modified/deleted/updated and so on by the controller.

For example, the data stored in the storage 150 includes not only an operation system for driving the display apparatus but also various applications, video data, additional data, etc. executable under the operating system. In the exemplary embodiment, the storage 150 may further store a look-up table (LUT) or an information table 151 which is used for a process of compensating for the video signal, the process which will be described below.

The controller 160 performs control operations of the display apparatus 100. For example, the controller 160 performs control operations of the imaging process of the image processor 120, and the control operations responding to a command from the user input portion 140, thereby controlling general operations of the display apparatus 100.

In the exemplary embodiment, the controller 160 may control the image processor 120 to perform an image compensating process of compensating for image distortion due to the optical sheet 138 attached to the display unit 130 using the LUT or the information table 151.

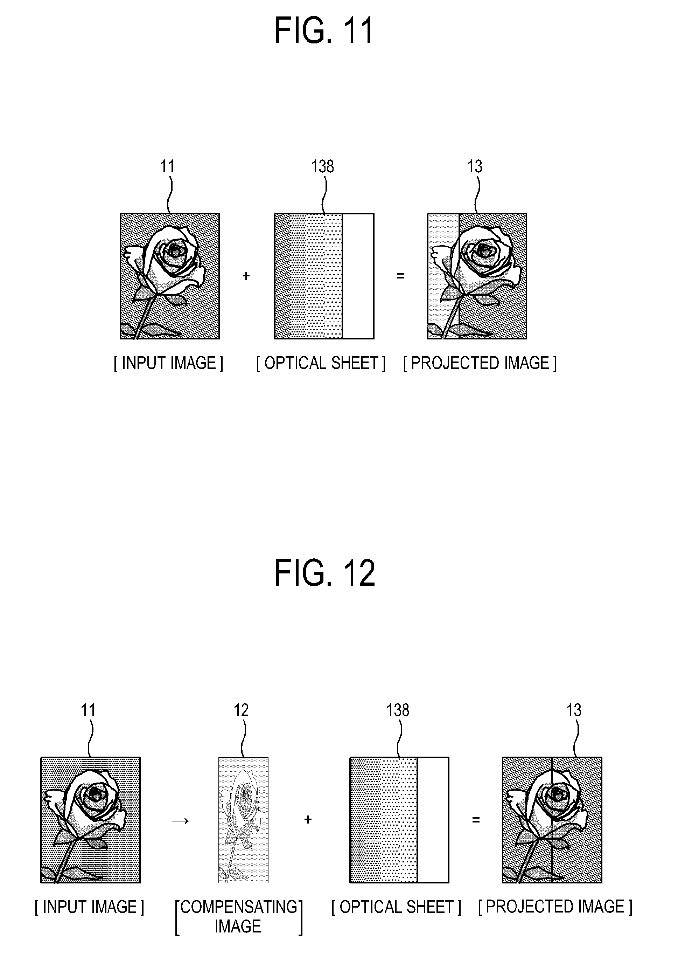

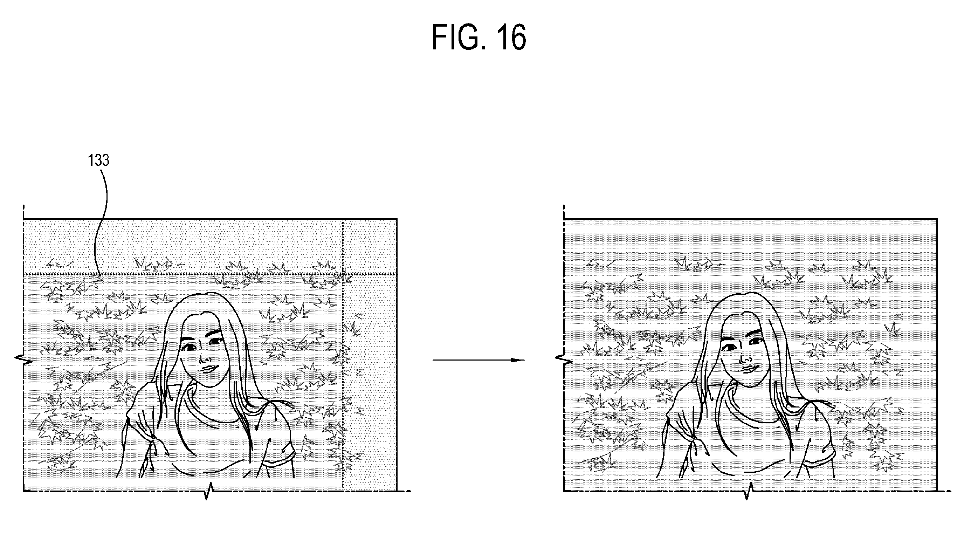

FIGs. 11 to 15 are views illustrating an image compensating process according to an exemplary embodiment, and FIG. 16 is a view illustrating images before and after compensating the image displayed on the display unit according to an exemplary embodiment. For example, if the optical sheet 138 is attached to a part of the front of the display unit 130 near the outer-most edge of the display device 130 as shown in FIG. 7, image distortion such as image expansion, low brightness, low image quality, etc. may occur in an area to which the optical sheet 138 is attached, for example, the edge of a screen. Also, the image distortion such as image blur or image blot may occur in a part of the border between the area to which the optical sheet 138 is attached and the area to which the optical sheet 138 is not attached. Although the optical sheet 138 can be substituted with the prism sheet 139 having a width (s') as shown in FIG. 8 or the pattern p as shown in FIG. 10, the light may be much diffused in a partial area of the optical sheet 138, and thus a little difference in brightness may be shown throughout the area.

Specifically, as shown in FIG. 11, a projected image 13 on the display panel passed through the optical sheet 138 may be distorted in a positional ratio of the image because an input image 11 is at least partially magnified as compared with its original image - e.g. due to the presence of the sheet 138.

In the display apparatus 100, a received video signal is decoded in the image processor 120, undergoes an imaging process for improving image quality, and is output in sync with predetermined timing by the timing controller (T-con), thereby displaying an image corresponding to an image displaying area of the display panel 131. In the exemplary embodiment, an image compensator 121 is added as an image processing block to compensate for predictable (that is, known or expected in advance) image distortion due to the optical sheet 138 having a width (s) before the video signal is typically processed for improving the image quality and then transmitted to the timing controller (T-con), so that the image distortion can be compensated by offsetting the distortion due to the optical sheet 138.

In the exemplary embodiment, the controller 160 controls the image compensator 121 to perform image compensation based on sharpness enhancement, brightness adjustment, contrast adjustment, etc. using an optical characteristic (for example, transmittance) of the optical sheet 138.

The image compensator 121 generates a compensating image 12 taking into consideration of optical conversion characteristics of the optical sheet 138. The compensating image 12 may be generated by compressing the size of an image, i.e., applying down-scaling to the image as shown in FIG. 12 so as to cope with inverse transformation of the image expansion due to the optical sheet 138.

The compensating image 12 is generated with anticipation of a screen size/ratio of an image displayed on the display unit 130 after the compensating image 12 penetrating the optical sheet 138, and thus maintains a ratio of the whole screen or image displayed thereon. The image compensator 121 may generate the compensating image 12 by applying the brightness adjustment, the contrast adjustment, etc. to the input image in addition to the down-scaling of the input image.

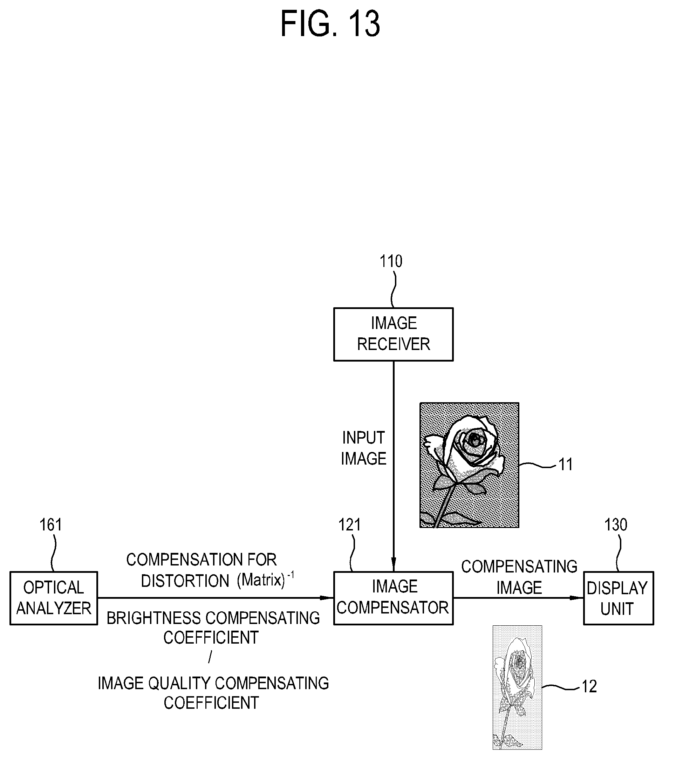

To this end, as shown in FIG. 13, the controller 160 may further include an optical analyzer 161 to analyze the optical image distortion including, for example, at least one of the image expansion, low brightness, and low image quality. The optical analyzer 161 transmits an analysis result to the image compensator 121, thereby performing the image compensation.

The optical analyzer 161 predicts the image distortion due to the attachment of the optical sheet 138, and generates the compensation image 12 as an inverse compensation for the distortion predicted of the optical sheet 138. Thus, as shown in FIG. 12, the compensating image 12 makes the finally projected image 13 passed through the optical sheet 138 to be a natural image identical to an original input image 11 without any distortion - i.e. as the image would have appeared in the absence of the optical sheet 138.

Specifically, the optical analyzer 161 analyzes the characteristic of the image distortion due to the optical sheet 138, i.e., the characteristic of the light passed through the optical sheet 138, and the image compensator 121 is controlled to compensate for an image of the corresponding area through a method of inversely converting the video signal by referring to the information table 151 (or the LUT) stored in the storage 150. To this end, the optical analyzer 161 may, for example, measure a characteristic of light penetrating the optical sheet 138 or a degree of image distortion through a sensor (not shown) or the like, and store the measured result in the information table 151 in the form of $n \times n$ matrix.

For example, the sensor may be located in one or more of the reproducing area, the non-reproducing area, the BM area, the bezel area and/or the optical sheet.

The optical analyser may, instead, access information in a look up table, in order to perform the analysis. For example, the look up table might store information relating to changes in optical properties when an optical sheet of configuration 'x' is applied to the screen, and when a sheet is applied, the optical analyser can use this information, with the compensator, to correct for such changes. For example, a hardware or software setting can be made which informs the analyser of the presence/absence of the optical sheet, and/or it's configuration/type. Alternatively a sensor, similar or identical to that as described above, might provide the analyser with this input.

The expansion of the image due to the optical sheet 138 may be varied depending on the structure and characteristic of an optical film disposed on the optical sheet 138. Thus, the display apparatus 100 stores an information table 151 in the storage 150 in the form of the $n \times n$ matrix, in which an expansion degree of an image due to the optical film of the optical sheet 138 is tabulated prior to the compensation process, and the optical analyzer 161 inversely compensates for the distortion of the image expansion due to the optical film of the optical sheet 138 through the inverse matrix $(Matrix)^{-1}$ of the previously stored information table 151.

The information table 151 additionally stores information about the transmittance of the optical sheet 138 and contrast (CR) information, and the optical analyzer 161 uses such information included in the information table 151 for further compensating for the brightness and image quality of the image passed through the optical sheet 138. This operation can be expressed as follows.

【Expression 1】

$$\text{Output image} = ((\text{Matrix})^{-1}) \times \text{input image} \times a \times b$$

where, $(\text{Matrix})^{-1}$ indicates the inverse matrix to the matrix compensating for the distortion of the image expansion; a is a coefficient of compensating for the brightness; and b is a coefficient of compensating for image quality.

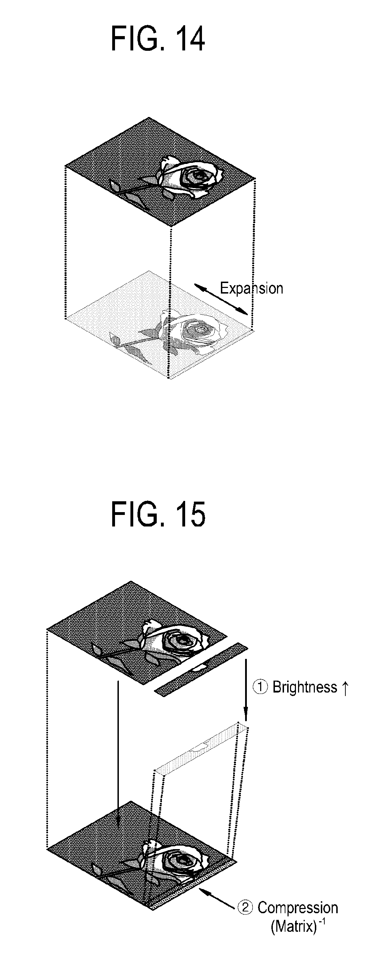

Thus, in the display apparatus 100 according to the exemplary embodiment, even though the distortion such as the image expansion or the like is caused by the optical sheet 138 as shown in FIG. 14, the brightness and/or the image quality is compensated by increasing the brightness (① Brightness ↑) and the image expansion is inversely compensated (② compression, $(\text{Matrix})^{-1}$) as shown in FIG. 15, thereby compensating the image distortion due to the optical sheet 138. As above, if such image compensating process is performed, the image distortion or the brightness difference between the area to which the optical sheet 138 is attached and the area to which the other area is minimized as shown in FIG. 16, thereby resolving a user's visual inconvenience.

In the exemplary embodiment, the image compensator 121 can selectively compensate an image corresponding to the area, to which the optical sheet 138 is attached, among the whole input image. Here, the image compensator 121 performs the image compensating process with regard to an area of the input image corresponding to an area of the optical sheet 138, and a preset partial area adjacent to the former area (for example, up to adjacent 5 pixels) so that an image can be naturally displayed.

Meanwhile, the foregoing exemplary embodiment describes an example that the input image (hereinafter, referred to as a first image) displayed on the reproducing area 133 is displayed on the BM area 135, but not limited thereto. Alternatively, a second image different from the first image may be displayed on the BM area 135. In the case where a separate image is displayed on the BM area 135, the image processor 120 may process the first and second images to be respectively displayed on the reproducing area 133 and the BM area 135, and the image compensator 121 may compensate the second image under control of the optical analyzer 161.

Below, a control method of the display apparatus 100 according to an exemplary embodiment will be described with reference to accompanying drawing.

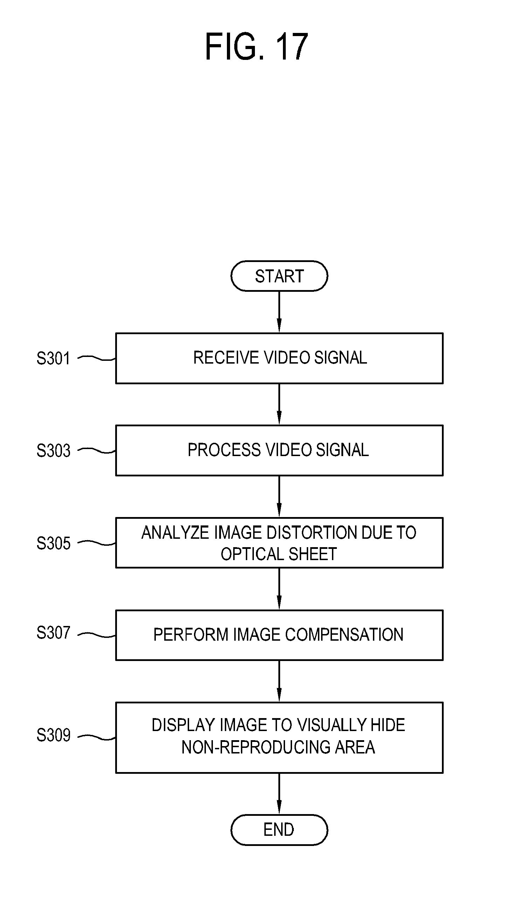

FIG. 17 is a flowchart illustrating a control method of the display apparatus according to an exemplary embodiment.

As shown in FIG. 17, the display apparatus 100 may receive a video signal from an external source through the image receiver 110 (S301).

The image processor 120 processes the video signal received in the operation S301 to be displayed on the display unit 130 (S303).

Here, the optical analyzer 161 of the controller 160 analyzes the image distortion due to the optical sheet 138 having a width (s) or the optical characteristic of the light passed through the optical sheet 138 with respect to the video signal processed at the operation S303 (S305). For example, the optical analyzer 161 may analyze at least one of image expansion, low brightness and low image quality characteristics of the optical sheet 138.

The image compensator 121 performs image compensation for the video signal processed at the operation S303, based on the analysis results from the operation S305 (S307). Here, the optical analyzer 161 may control the image compensator 121 so that the image compensation can be performed using the information table 151 stored in the storage 150 corresponding to the analysis results from the operation S305). For example, the optical analyzer 161 uses the inverse matrix $(\text{Matrix})^{-1}$, a brightness compensating coefficient of the inverse transformation, an image quality compensating coefficient, etc. stored in the information table 151 to control the compensating process of the image compensator 121, and the compensated video signal may be generated by definition improvement, brightness adjustment, contrast adjustment, etc.

Further, the controller 160 displays an image on the display unit 130 so that the non-reproducing areas including the BM area 135 and the bezel area 137 can be visually hidden in accordance with the video signal processed in the operations S303 to S307 (S309).

As above, according to exemplary embodiments, the display apparatus 100 uses the optical sheet to visually hide the non-reproducing area including the BM area 135 and the bezel area 137 in order to achieve what appears to the user as a bezel-less display apparatus, and/or an apparatus that appears free from a non-reproducing area, so that a user's engagement to images displayed on the display apparatus 100 can be maximized in a screen while the user watches the screen and a degree of freedom can be increased through design improvement with regard to the bezel, thereby increasing product power. In a particular environment of a large format display (LFD) using a plurality of display apparatuses/panels, disconnection of adjacent images is minimized, thereby improving an effect on transmitting an image message.

Also, light can be uniformly diffused and output through the optical sheet 138, and image distortion due to the optical sheet 138 is compensated, thereby minimizing a user's fatigue in watching an image and providing a user with an image of high quality.

While exemplary embodiments have been particularly shown and described above, it would be appreciated by those skilled in the art that various changes may be made therein without departing from the principles and spirit of the present inventive concept, the scope of which is defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A display apparatus comprising:

   an image processor configured to process a video signal into an image;
   a display unit comprising a reproducing area in which the processed image is displayed and a non-reproducing area in which no image is displayed; and
   an optical sheet disposed on the non-reproducing area of the display unit,
   wherein the optical sheet is configured to diffuse light passed therethrough and configured to visually hide the non-reproducing area.

2. The display apparatus according to claim 1, wherein the non-reproducing area comprises a black matrix area surrounding the reproducing area,
   and, optionally,
   the non-reproducing area further comprises a bezel area surrounding at least one of the reproducing area and the black matrix area.

3. The display apparatus according to claim 1 or claim 2, wherein the optical sheet is configured to output the light passed through the optical sheet from the non-reproducing area,
   and, optionally,
   the optical sheet is configured to output the light passed therethrough from the black matrix area toward the non-reproducing area.

4. The display apparatus according to any preceding claim, wherein the image processor comprises an image compensator configured to compensate for image distortion due to the optical sheet,
   and, optionally,
   the apparatus further comprises a controller configured to control the image compensator to analyze a characteristic of the optical sheet and compensate for the image distortion based on the compensator analysis.

5. The display apparatus according to claim 4, wherein the controller comprises an optical analyzer configured to analyze at least one of image expansion, low brightness, and low image quality due to the optical sheet.

6. The display apparatus according to claim 5, further comprising a storage configured to store an information table generated by measuring the characteristic of the optical sheet,

wherein the optical analyzer is configured to control the image compensator to compensate for the image distortion through inverse transformation of the information table.

7. The display apparatus according to claim 5 or claim 6, wherein the optical analyzer is configured to control the image compensator to compensate for the image distortion through at least one of a brightness compensating coefficient and an image quality compensating coefficient.

8. The display apparatus according to any of claims 4 to 7, wherein the image compensator is configured to perform at least one of definition improvement, brightness adjustment and contrast adjustment definition.

9. The display apparatus according to claim 1, wherein the optical sheet comprises a pattern configured to guide the light passed through the optical sheet,
and, optionally,
the pattern comprises:

a low density area in a light incident area; and
a high density area in an edge area of the display unit.

10. The display apparatus according to any preceding claim, wherein the optical sheet is attached to at least a part of the display unit on a surface extending perpendicular from a display apparatus thickness direction.

11. The display apparatus according to any preceding claim, wherein the optical sheet comprises a prism sheet having a triangular cross-section.

12. The display apparatus according to any preceding claim, wherein a width of the optical sheet in a direction perpendicular from a display apparatus thickness direction is larger than a width of the non-reproducing area.

13. A method of controlling a display apparatus comprising a display unit comprising a reproducing area in which an image is displayed and a non-reproducing area in which no image is displayed and an optical sheet disposed on the display unit, the method comprising:

processing a video signal; and
displaying an image based on the processed video signal,
wherein the displaying comprises:

diffusing light of the image through the optical sheet; and
visually hiding the non-reproducing area via the diffused light.

14. A display panel comprising:

a reproducing area configured to display an image;
a non-reproducing area configured to display no image and surrounding the reproducing area; and
an optical sheet provided on the non-reproducing area configured to diffuse light from the image of the reproducing area and configured to visually hide the non-reproducing area,
wherein a width of the optical sheet in a direction perpendicular from a display apparatus thickness direction is larger than a width of the non-reproducing area.

15. A display panel comprising:

a display unit configured to display an image;
an optical sheet disposed on a display side of the display unit, the optical sheet configured to diffuse light emitted from an edge area of the display unit in which the image is displayed towards an outermost edge of the display panel.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

11            138          13

[ INPUT IMAGE ]    +    [ OPTICAL SHEET ]    =    [ PROJECTED IMAGE ]

# FIG. 12

11      12      138      13

[ INPUT IMAGE ]    →    [COMPENSATING IMAGE]    +    [ OPTICAL SHEET ]    =    [ PROJECTED IMAGE ]

# FIG. 13

110

IMAGE
RECEIVER

INPUT
IMAGE

11

161

OPTICAL
ANALYZER

COMPENSATION FOR
DISTORTION (Matrix)$^{-1}$

BRIGHTNESS COMPENSATING
COEFFICIENT
/
IMAGE QUALITY COMPENSATING
COEFFICIENT

121

IMAGE
COMPENSATOR

COMPENSATING
IMAGE

130

DISPLAY
UNIT

12

# FIG. 14

# FIG. 15

FIG. 16

# FIG. 17

```
                    ┌─────────────┐
                    │   START     │
                    └──────┬──────┘
                           │
                           ▼
S301 ──┐    ┌──────────────────────────────┐
       │    │    RECEIVE VIDEO SIGNAL       │
            └──────────────┬───────────────┘
                           │
                           ▼
S303 ──┐    ┌──────────────────────────────┐
       │    │    PROCESS VIDEO SIGNAL       │
            └──────────────┬───────────────┘
                           │
                           ▼
S305 ──┐    ┌──────────────────────────────┐
       │    │  ANALYZE IMAGE DISTORTION DUE TO │
       │    │       OPTICAL SHEET           │
            └──────────────┬───────────────┘
                           │
                           ▼
S307 ──┐    ┌──────────────────────────────┐
       │    │   PERFORM IMAGE COMPENSATION  │
            └──────────────┬───────────────┘
                           │
                           ▼
S309 ──┐    ┌──────────────────────────────┐
       │    │  DISPLAY IMAGE TO VISUALLY HIDE │
       │    │    NON-REPRODUCING AREA       │
            └──────────────┬───────────────┘
                           │
                           ▼
                    ┌─────────────┐
                    │    END      │
                    └─────────────┘
```